# EUROPEAN PATENT SPECIFICATION

(11) **EP 2 738 000 B1**
(45) Date of publication and mention of the grant of the patent: **22.06.2016**
(21) Application number: 12817993.4
(22) Date of filing: 26.07.2012
(51) Int. Cl.: B32B 27/34, B32B 5/18, B32B 27/18, F16L 59/00, B64C 1/40, B32B 5/22, B32B 25/04, B32B 25/16, B32B 25/18, C08K 3/00, B32B 27/28, C08J 9/36, F16L 59/02

(54) **LAMINATE AND THERMAL-INSULATION MATERIAL USING SAME**
LAMINAT UND WÄRMEISOLATIONSMATERIAL DAMIT
STRATIFIÉ ET MATIÈRE D'ISOLATION THERMIQUE L'UTILISANT

(30) Priority: 28.07.2011 JP 2011165283
(43) Date of publication of application: 04.06.2014
(73) Proprietor: UBE Industries, Ltd., Yamaguchi 755-8633 (JP)
(72) Inventor: HOSOMA, Toshinori, Ube-shi Yamaguchi 755-8633 (JP); YAMAMOTO, Shigeru, Ichihara-shi Chiba 290-0045 (JP)
(74) Representative: Grünecker Patent- und Rechtsanwälte PartG mbB
(86) International application number: PCT/JP2012/068998
(87) International publication number: WO 2013/015370

(56) References cited:
- EP-A1- 1 348 542
- EP-A1- 2 457 723
- JP-A- 2 041 332
- JP-A- 2002 528 690
- JP-A- 2005 153 424
- JP-A- 2007 090 588
- JP-A- 2009 274 284
- JP-A- 2011 042 723
- JP-A- 2011 194 796
- US-A- 4 488 619

## Description

### Technical Field

The present invention relates to a laminate of a polyimide foam and a flame-retardant resin composition, and a thermal insulation material including the same. Particularly, the present invention relates to a laminate of a polyimide foam and a surface layer including a flame-retardant resin composition containing a chlorine-containing elastomer and a flame retardant and laminated on the polyimide foam so as to be integrated therewith, and a thermal insulation material including the same.

### Background Art

Since a polyimide foam is excellent in thermal resistance, mechanical characteristics and the like, and is flame retardant, it is used as a thermal insulation material, a sound insulation material and the like, which is used in an environment where these characteristics are required.

For example, Patent Literature 1 and 3 disclose a polyimide foam formed of a polyimide having a glass transition temperature higher than 300°C.

In addition, Patent Literature 2 discloses a polyimide foam coated with a fluorine polymer coating having flexibility.

### Citation List

### Patent Literatures

Patent Literature 1: JP 2002-12688 A
Patent Literature 2: JP 2011-42723 A
Patent Literature 3: EP 2 457 723 A1

### Summary of Invention

### Technical Problem

Since a polyimide foam does not have a property of preventing moisture permeation, a problem of water condensation may occur when it is used as a thermal insulation material. In order to prevent this problem, it is conceivable to dispose a surface layer formed of a resin composition. However, there is a problem that inherent characteristics such as thermal resistance, mechanical characteristics and flame retardancy of the polyimide foam are impaired depending on the resin composition to be used. In addition, the fluorine-based resin as disclosed in Patent Literature 2 has a problem that extremely highly toxic gas is generated when it is placed under a high temperature.

The present invention has been made in view of the above problems, and it is an object of the present invention to provide a laminate of a polyimide foam having an excellent thermal resistance, an excellent flame retardancy, a high safety and a high moisture-proof effect, and a thermal insulation material including the same.

### Solution to Problem

The present inventors have intensively studied so as to achieve the above object and consequently found that a surface layer including a flame-retardant resin composition containing a chlorine-containing elastomer and a flame retardant is laminated on a polyimide foam so as to be integrated therewith, whereby a laminate having a high safety and an excellent moisture-proof effect can be obtained without impairing inherent thermal resistance and flame retardancy of the polyimide foam, and thus the present invention has been completed.

More specifically, the present invention is constructed as follows.
1. A laminate comprising: a foam formed of polyimide having a glass transition temperature (Tg) exceeding 300°C; and a surface layer including a flame-retardant resin composition and a reticulated sheet formed of polyamide, and laminated on at least one surface of the foam so as to be integrated therewith, the flame-retardant resin composition containing a chlorine-containing elastomer and a flame retardant.
2. The laminate wherein the above-described chlorine-containing elastomer is a chlorosulfonated polyethylene.
3. A thermal insulation material which includes the laminate.

### Advantageous Effects of Invention

As described above, according to the present invention, there can be provided a laminate including a polyimide foam having an excellent thermal resistance, an excellent flame retardancy, a high safety and a high moisture-proof effect, and a thermal insulation material including the same.

Since the laminate of the present invention has an excellent thermal resistance, excellent flame retardancy, high safety, and high moisture-proof effect, and does not permeate moisture, it can be preferably used as various thermal insulation materials, specifically, a thermal insulation material for aircraft.

### Description of Embodiment

The laminate of the present invention features that it comprises a foam formed of polyimide having a glass transition temperature (Tg) exceeding 300°C and a surface layer including of a flame-retardant resin composition containing a chlorine-containing elastomer and a flame retardant, and laminated on at least one surface of the foam so as to be integrated therewith. Here, "at least one surface of the foam" includes not only a case where a surface layer is laminated only on one surface of the foam or a surface layer is laminated on both surfaces of the foam, but also a case where the entire surface of the foam is coated with a surface layer. In addition, the surface layer includes the flame-retardant resin composition and a reticulated sheet.

The polyimide foam that is used in the present invention is formed of polyimide which has a glass transition temperature (Tg) exceeding 300°C, and usually is preferably aromatic polyimide formed of an aromatic tetracarboxylic acid component and an aromatic diamine compound.

As the aromatic tetracarboxylic acid component, there can be suitably used aromatic tetracarboxylic acids which include biphenyl tetracarboxylic acids such as 2,3,3',4'-biphenyltetracarboxylic acids, 3,3',4,4'-biphenyltetracarboxylic acids and 2,2',3,3'-biphenyltetracarboxylic acids; benzophenonetetracarboxylic acids such as pyromellitic acids, 3,3',4,4'-benzophenonetetracarboxylic acids; naphthalenetetracarboxylic acids such as 2,3,6,7-naphthalenetetracarboxylic acids, 1,2,5,6-naphthalenetetracarboxylic acids, 1,4,5,8-naphthalenetetracarboxylic acids; bis(dicarboxyphenyl)ethers such as bis(3,4-dicarboxyphenyl)ethers; bis(dicarboxyphenyl)propanes such as 2,2-bis(2,5-dicarboxyphenyl)propanes; bis(dicarboxyphenyl)ethanes such as 1,1-bis(2,3-dicarboxyphenyl)ethanes; and bis(dicarboxyphenyl)sulfones such as 1,1-bis(3,4-dicarboxyphenyl)sulfones. Aromatic tetracarboxylic acids can be suitably used singly or in an admixture thereof. Among them, it is particularly preferred to use biphenyltetracarboxylic acids as a main component of the aromatic tetracarboxylic acid component (50% by mol or more, preferably 80% by mol or more).

Here, the aromatic tetracarboxylic acids refer to an aromatic tetracarboxylic acid that can form a polyimide of an aromatic tetracarboxylic acid, an esterification product thereof, an anhydride thereof or the like, and a derivative thereof.

As the aromatic diamine component, there can be suitably used aromatic diamines having one benzene nucleus such as p-phenylenediamine, m-phenylenediamine, 2,4-diaminotoluene 2,6-diaminotoluene and 3,5-diaminobenzoic acid; aromatic diamines having two benzene nucleuses such as 4,4'-diaminodiphenylether, 3,4'-diaminodiphenylether, 4,4'-diaminodiphenylmethane and 4,4'-diaminodiphenylsulfone; aromatic diamines having three benzene nucleuses such as 1,3-bis(3-aminophenoxy)benzene and 1,3-bis(4-aminophenoxy)benzene; aromatic diamines having four benzene nucleuses such as bis(4-(4-aminophenoxy)phenyl)sulfone, bis(4-(3-aminophenoxy)phenyl)sulfone, 4,4'-bis(3-aminophenoxy)biphenyl, 4,4'-bis(4-aminophenoxy)biphenyl and 2,2'-bis(4-(4-aminophenoxy)phenyl)propane; aromatic diamines having a naphthalene ring such as diaminonaphthalene; and aromatic diamines having a heterocyclic ring such as 2,6-diaminopyridine. Aromatic diamines can be used singly or in an admixture thereof. Among them, it is preferred to use at least one selected from the group consisting of p-phenylenediamine, m-phenylenediamine, 4,4'-diaminodiphenylether, 3,4'-diaminodiphenylether, 4,4'-diaminodiphenylmethane, 4,4'-diaminodiphenylsulfone and 2, 6-diaminopyridine, as a main component of the aromatic diamine component (50% by mol or more, preferably 80% by mol or more).

The polyimide foam that can be used in the present invention can be obtained, for example, according to the following steps.

First, an aromatic tetracarboxylic acid component, for example, 2,3,3',4'-biphenyltetracarboxylic dianhydride, is mixed with an aromatic diamine component, for example, p-phenylenediamine, and the mixture is homogeneously dissolved in a lower alcohol solvent such as methanol or ethanol to prepare a polyimide precursor composition solution, followed by removing the solvent from this solution to obtain a polyimide precursor composition powder.

Next, an appropriate temporary molded mass is prepared using the polyimide precursor composition powder obtained as described above, and is heated to be foamed and imidized, whereby a polyimide foam can be obtained. Heating is preferably performed in two stages, heating for foaming and heating for heat fixing (imidization and increase in the molecular weight). Since it is necessary to homogeneously perform the heating for foaming, and microwave heating is preferred. For example, where the output of microwaves is approximately 100 g/l kW based on the weight of the polyimide precursor composition, foaming is started after about 1 minute, and the foaming subsides after a few minutes. In the forming, a shield plate that allows gas to pass is placed, and compressive force is applied thereto, whereby mechanical densification of the foamed product can be also performed to control the foaming ratio. Since the polyimide has a low molecular weight and is brittle in this state, it is necessary to perform the heating for heat fixing by hot air or the like. Eventually, it is preferred to perform heating at a temperature of approximately Tg + 40°C for about 5 to 60 minutes to complete imidization and increase in the molecular weight.

In addition, a commercially available polyimide foam can be also used, and the commercially available polyimide foam includes, for example, UPILEX foams BF301 and BF303 manufactured by Ube Industries, Ltd.

The flame-retardant resin composition that can be used in the present invention is one containing at least a chlorine-containing elastomer and a flame retardant. The chlorine-containing elastomer includes epichlorohydrin rubbers, chloroprene rubbers, chlorosulfonated polyethylene, chlorinated polyethylene, chlorinated ethylene-propylene copolymers, polyvinyl chloride, chlorinated butyl rubbers, acrylic rubbers copolymerized with a chlorine-containing monomer, and the like. Among them, from the viewpoint of thermal resistance, mechanical characteristics and the like, chlorosulfonated polyethylene (CSM) is particularly preferable.

Chlorosulfonated polyethylene is obtained by chlorosulfonating polyethylene. For example, chlorosulfonated polyethylene can be obtained by chlorosulfonating a high-density polyethylene, a low-density polyethylene or an ethylene-α-olefin copolymer (linear low-density polyethylene), or the like by a method concurrently using chlorine and sulfurous acid gas, concurrently using chlorine and sulfuryl chloride or singly using sulfuryl chloride.

The chlorosulfonated polyethylene has a chlorine content of usually 20 to 50% by weight and preferably 30 to 40% by weight. In addition, the chlorosulfonated polyethylene has a sulfur content of usually 0.3 to 2.0% by weight. Furthermore, the chlorosulfonated polyethylene has a Mooney viscosity (ML₁₊₄, 100°C) of 10 to 190, preferably 20 to 150, and further preferably 30 to 120, from the aspect of moldability and workability.

The flame retardant is not particularly limited as long as it can achieve desired flame retardancy, but it is preferred to use an inorganic flame retardant, particularly a metal hydroxide. The metal hydroxide includes magnesium hydroxide, aluminum hydroxide, hydrotalcite, and the like. The amount of the flame retardant used is preferably 10 to 100 parts by weight, based on the chlorine-containing elastomer.

Besides, a vulcanizing agent, a vulcanization accelerator, a filler, a plasticizer, a processing aid, an anti-aging agent and the like are added to this flame-retardant resin composition, as necessary.

The vulcanizing agent include, for example, inorganic vulcanizing agents such as magnesium oxide, and organic vulcanizing agents such as dicumylperoxide. Examples of the vulcanization accelerator include thiuram compounds such as dipentamethylenethiuram tetrasulfide, tetramethylthiuram disulfide and tetraethylthiuram disulfide; 6-ethoxy-1,2-dihydro-2,2,4-trimethylquinoline; dibutyldithiocarbamic acid; and 2-mercaptobenzimidazole. Examples of the reinforcing agent and filler include carbon black, white carbon, calcium carbonate, clay, and talc. As the plasticizer, for example, fatty acid esters or various oils are used, and as the processing aid, for example, chlorinated paraffin or the like is used. As the anti-aging agent, for example, an amine-based anti-aging agent, a phenolic anti-aging agent or the like can be used.

The flame-retardant resin composition described above constitutes the surface layer in combination with a reticulated sheet, because the strength, particularly, the penetration strength, of the obtained laminate is increased.

Examples of the reticulated sheet that can be used in the present invention include woven fabrics or knitted fabrics obtained by weaving or knitting yarns made from polyamide so as to be reticulated. In addition, a reticulated nonwoven fabric made from these yarns can be used.

The laminate of the present invention can be produced, for example, by dissolving the flame-retardant resin composition in a solvent to form a resin composition solution, directly applying the solution to a polyimide foam, and drying the solution to form a surface layer.

In addition, the laminate of the present invention can be also produced by applying the resin composition solution to a support such as a stainless steel belt or a release film, drying the solution to be molded into a sheet, superposing the sheet on the surface of a polyimide foam, and heat-integrating therewith to form a surface layer. Though the heating temperature is not particularly limited, it is generally preferably about 100 to 200°C. In the heat-integration, the sheet-like resin composition may be isolated from the support and used, or may be used with being attached to the support. In addition, it is more preferred to superpose the sheet-like resin composition on the surface of the polyimide foam in a state that the resin composition solution is previously applied to the surface of the polyimide foam and is not yet dried, because the heat-integration is performed easily.

Forming of a surface layer in combination with a reticulated sheet, for example, can be performed by applying the resin composition solution to the reticulated sheet in a state that the reticulated sheet is put on the polyimide foam. In addition, when a molded sheet-like resin composition is used, a surface layer can be also formed by sandwiching the reticulated sheet between the sheet-like resin composition and the polyimide foam and heat-integrating the entire structure. Furthermore, a surface layer can be also formed by previously disposing the reticulated sheet on the support to integrally mold the resin composition and the reticulated sheet, and heat-integrating the entire structure using the integral molding. The methods described above are an example, and the reticulated sheet is not required to be placed between the polyimide foam and the flame-retardant resin composition, and it is also possible to laminate the flame-retardant resin composition and the reticulated sheet on the polyimide foam in this order, to form a surface layer.

### Examples

Hereinbelow, the present invention will be more specifically described by way of examples, but the present invention is not limited by these examples.

In Examples, measurements were performed as described below.

### (Moisture Weight Reduction)

An opening of a 200 CC-glass bottle containing 100 g of water was sealed with the prepared laminate, and the weight reduction after 24 hours was measured.

### (Oxygen Index)

The oxygen index was determined according to JIS K 7201. The oxygen index shows a limit of oxygen concentration in which the material can sustain combustion, and generally, an oxygen index of 26 or more indicates flame retardancy.

### (Penetration Strength)

The laminate was fixed on a flat plate having a 60 mmφ hole, and a 20 mmφ bolt with a hemispherical tip was pushed into the center of the hole at a rate of 20 mm/min, then the force required to penetrate the plate with the bolt was measured.

### (Comparative Example 1)

1 part by weight of a fatty acid ester (manufactured by Kao Corporation: SPLENDER R-300), 50 parts by weight of aluminum hydroxide (manufactured by Showa Denko K.K.: HIGILITE H-42M), 1 part by weight of a pigment (manufactured by DIC Corporation: Fastogen Super Maroon), 5 parts by weight of titanium oxide (manufactured by ISHIHARA SANGYO KAISHA, LTD.: R-820), 15 parts by weight of chlorinated paraffin (manufactured by TOSOH CORPORATION: TOYOPARAX A-40), and 2 parts by weight of tetraethylthiuram disulfide (manufactured by OUCHI SHINKO CHEMICAL INDUSTRIAL CO., LTD.: NOCCELER TET) were added to 100 parts by weight of chlorosulfonated polyethylene (CSM) (manufactured by TOSOH CORPORATION: TOSO-CSM TS-530) were added 4 parts by weight of magnesium oxide (manufactured by Kyowa Chemical Industry Co.,Ltd.: Kyowa Mag 150), and 100 parts by weight of the mixture was dissolved in 256 parts by weight of toluene, thereby to prepare chlorosulfonated polyethylene composition solution as a flame-retardant resin composition solution.

This solution was applied on a release surface of a silicone release paper, and heated at 150°C for 5 minutes, to obtain a release paper coated with the chlorosulfonated polyethylene composition (CSM sheet). The coating surface of this release paper was superposed on a polyimide foam (manufactured by Ube Industries, Ltd.: UPILEX foam BF303) with a thickness of 2 mm, formed of a polyimide having a glass transition temperature (Tg) of 360°C, coated with the chlorosulfonated polyethylene composition solution on the surface thereof, and the resulting structure was heated at 150°C for 30 minutes while being pressurized, and thereafter, the release paper was stripped to obtain a laminate in which surface of the polyimide foam was coated with the chlorosulfonated polyethylene composition.

The reduction rate of moisture weight of this laminate was 1% or less.

### (Example 2)

A nylon net (yarn: 66 nylon yarn 24T-7-1205 manufactured by Toray Industries, Inc., net structure: six courses tulle) was superposed on a polyimide foam (manufactured by Ube Industries, Ltd.: UPILEX foam BF303) with a thickness of 2 mm, coated with the chlorosulfonated polyethylene composition solution prepared in the same manner as in Comparative Example 1 on the surface thereof, and the coating surface of this release paper coated with the chlorosulfonated polyethylene composition obtained in the same manner as in Comparative Example 1 was superposed thereon. Thereafter, the resulting structure was heated at 150°C for 30 minutes while being pressurized, and the release paper was stripped to obtain a laminate in which surface of the polyimide foam was coated with the chlorosulfonated polyethylene composition and reinforced by the nylon net.

The reduction rate of moisture weight of this laminate was 1% or less.

### (Example 3)

The chlorosulfonated polyethylene composition solution prepared in the same manner as in Comparative Example 1 was applied on the release surface of the release paper, then the nylon net as used in Example 2 was superposed thereon, followed by heating at 150°C for 5 minutes to obtain a release paper coated with the chlorosulfonated polyethylene composition integrated with the nylon net. The coating surface of this release paper was superposed on a polyimide foam (manufactured by Ube Industries, Ltd.: UPILEX foam BF303) with a thickness of 2 mm, coated with the chlorosulfonated polyethylene composition solution on the surface thereof. Thereafter, the resulting structure was heated at 150°C for 30 minutes while being pressurized, and the release paper was stripped to obtain a laminate having a surface layer in which the nylon net and the chlorosulfonated polyethylene composition were integrated on the surface of the polyimide foam.

The reduction rate of moisture weight of this laminate was 1% or less.

### (Comparative Example 4)

The same procedure was carried out as in Comparative Example 1 except for using a polyimide foam (manufactured by Ube Industries, Ltd. : UPILEX foam BF303) with a thickness of 10 mm to obtain a laminate.

### (Example 5)

The same procedure was carried out as in Example 3 except for using a polyimide foam (manufactured by Ube Industries, Ltd.: UPILEX foam BF303) with a thickness of 10 mm to obtain a laminate.

**[Table 1]**

| | Thickness (Foam) (mm) | CSM Sheet (g/m²) | Nylon Net (g/m²) | Oxygen Index |
|---|---|---|---|---|
| Comparative Example 1 | 2 | 143 | None | 43 |
| Example 2 | 2 | 143 | 16 | 44 |
| Example 3 | 2 | 144 | 16 | 49 |

**[Table 2]**

| Example | Thickness (Foam) (mm) | CSM Sheet (g/m²) | Nylon Net (g/m²) | Penetration Strength (N) |
|---|---|---|---|---|
| Comparative Example 4 | 10 | 143 | None | 15 |
| Example 5 | 10 | 144 | 16 | 91 |

## Claims

1. A laminate comprising:
a foam formed of polyimide having a glass transition temperature (Tg) exceeding 300°C; and
a surface layer including a flame-retardant resin composition and a reticulated sheet formed of polyamide, and laminated on at least one surface of the foam so as to be integrated therewith, the flame-retardant resin composition containing a chlorine-containing elastomer and a flame retardant.

2. The laminate according to claim 1, wherein the chlorine-containing elastomer is a chlorosulfonated polyethylene.

3. A thermal insulation material which comprises the laminate as recited in any one of claims 1 or 2.

## Patentansprüche

1. Laminat umfassend:
einen Schaumstoff, der aus Polyimid mit einer Glasübergangstemperatur (Tg) von mehr als 300 °C gebildet ist; und
eine Oberflächenschicht, die eine flammenhemmende Harzzusammensetzung und eine netzartige Lage, die aus Polyamid gebildet ist, einschließt und auf wenigstens eine Oberfläche des Schaumstoffs laminiert ist, so dass sie damit integriert ist, wobei die flammenhemmende Harzzusammensetzung ein chlorhaltiges Elastomer und ein Flammverzögerungsmittel enthält.

2. Laminat gemäß Anspruch 1, wobei das chlorhaltige Elastomer ein chlorsulfoniertes Polyethylen ist.

3. Wärmeisolationsmaterial, welches das Laminat nach einem der Ansprüche 1 oder 2 umfasst.

## Revendications

1. Stratifié comprenant :
une mousse constituée de polyimide ayant une température de transition vitreuse (Tg) supérieure à 300 °C ;
et
une couche de surface comprenant une composition de résine ignifuge et une feuille réticulée constituée de polyamide, et stratifiée sur au moins une surface de la mousse afin d'être intégrée à celle-ci, la composition de résine ignifuge contenant un élastomère chloré et un ignifugeant.

2. Stratifié selon la revendication 1, l'élastomère chloré étant un polyéthylène chlorosulfoné.

3. Matière d'isolation thermique comprenant le stratifié tel que décrit dans l'une quelconque des revendications 1 ou 2.
